# FASCICULE DE BREVET EUROPEEN

(11) **EP 4 005 374 B1**
(45) Date de publication et mention de la délivrance du brevet: **03.01.2024**
(21) Numéro de dépôt: 21210404.6
(22) Date de dépôt: 25.11.2021
(51) Int. Cl.: A01K 5/00

(54) **MÉLANGEUSE AVEC UN DISPOSITIF DE DÉCHARGEMENT EN DEUX PARTIES**
MISCHER MIT EINER ZWEITEILIGEN AUSLASSÖFFNUNG
MIXER WITH A TWO-PART UNLOADING DEVICE

(30) Priorité: 30.11.2020 FR 2012406
(43) Date de publication de la demande: 01.06.2022
(73) Titulaire: Kuhn-Audureau SAS, 85260 La Copechagnière (FR)
(72) Inventeur: BRELE, Grégoire, 85140 Essarts-en-Bocage (FR); SORIN, Benoît, 44116 Vieillevigne (FR)
(74) Mandataire: Cabinet Nuss

(56) Documents cités:
- EP-A1- 3 345 475
- EP-A2- 2 189 058
- DE-U1-202006 015 060

## Description

La présente invention concerne le domaine du machinisme agricole, plus particulièrement les équipements pour la distribution de produits d'alimentation animale, en particulier de mélanges à base de nourriture ensilée ou autre, dans les étables ou analogues.

Dans ce contexte, l'invention porte plus spécifiquement sur une mélangeuse, automotrice ou destinée à être attelée, pourvue d'un dispositif de déchargement latéral sous la forme d'un convoyeur mobile à bande, en au moins deux parties articulées entre elles.

Ce type de machine de distribution de nourriture pour les animaux (souvent des mélanges de différents aliments, fourrages et additifs formant une ration) doit pouvoir s'adapter aux équipements et installations variés des étables ou bâtiments similaires, et notamment aux différentes configurations de table d'alimentation (tous les bâtiments au sein d'une ferme ont rarement la même configuration ou les mêmes dimensions).

Avec une ouverture de décharge généralement centrée par rapport à la cuve et située en partie inférieure de cette dernière, il est nécessaire de prévoir un dispositif de décharge qui transporte le produit mélangé depuis cette ouverture latéralement vers la table d'alimentation, pendant que la mélangeuse se déplace ou non pour distribuer les produits mélangés.

Un tel dispositif de décharge doit pouvoir distribuer le produit mélangé :
- dans une configuration horizontale rectiligne sans déport (correspond aussi à la position transport) pour un déchargement à plat ;
- dans une configuration horizontale rectiligne avec déport, pour un déchargement à plat décalé latéralement d'un côté ;
- dans une position déportée et avec une configuration inclinée du côté du déport, pour atteindre les auges surélevées.

Par les document US 2008/0105520 et EP 3345475 notamment, on connait déjà des mélangeuses comprenant une cuve de mélange avec une ouverture de déchargement, avantageusement frontale et préférentiellement sensiblement centrée par rapport à la direction d'avance, et un dispositif de déchargement qui est associé à l'ouverture de décharge et qui est apte et destiné à transporter le produit mélangé sortant de l'ouverture de déchargement et à le déposer au niveau d'une table d'alimentation située sur un côté latéral de ladite mélangeuse. Ces dispositifs de déchargement connus comprennent un convoyeur à bande transporteuse qui est arrangé transversalement par rapport à la direction d'avance de la mélangeuse et s'étend au moins sous l'ouverture de déchargement sur toute la largeur de cette dernière. De plus, les convoyeurs de ces mélangeuses connues sont mobiles transversalement à la direction d'avance et constitués chacun de deux parties, dans le sens de son extension longitudinale, à savoir une première partie de plus grande longueur et une seconde partie de plus faible longueur. Cette seconde partie est reliée à la première partie par une liaison pivot et est mobile entre une position horizontale, dans laquelle elle est coplanaire avec la première partie, et plusieurs positions inclinées par rapport à ladite première partie.

Toutefois, dans ces deux réalisations connues, les moyens (tringlerie, biellettes, glissières) assurant le mouvement de pivotement de la seconde partie sont arrangés sous cette partie et il en résulte, en utilisation, une accumulation de produit déchargé sur ces moyens lors de la distribution, nécessitant un nettoyage régulier pour permettre un fonctionnement fiable dans le temps et ralentir un inéluctable encrassement.

En outre, ces moyens font saillie latéralement et sous la partie de convoyeur qui est soulevée d'un côté par pivotement : ils sont de ce fait non directement apparents et exposés de manière privilégiée aux chocs par interférence et/ou accrochage avec les équipements des étables et peuvent donc être facilement endommagés.

On connait également la mélangeuse divulguée dans le document EP2189058 A2.

Le but de l'invention est de proposer une solution permettant de surmonter les principales limitations des deux solutions connues présentées ci-dessus, c'est-à-dire notamment fournir des moyens de pivotement de la seconde partie inclinable du convoyeur qui ne sont pas sujet à l'accumulation de produit distribué et qui ne sont pas exposés aux chocs.

A cet effet, l'invention a pour objet une mélangeuse automotrice ou destinée à être attelée à un véhicule tracteur, comprenant un châssis porteur, une cuve de mélange avec une ouverture de déchargement, et un dispositif de déchargement qui est associé à l'ouverture de décharge et qui est apte et destiné à transporter le produit sortant de l'ouverture de déchargement et à le déposer sur un côté latéral de ladite mélangeuse, par exemple au niveau d'une table d'alimentation, le dispositif de déchargement comprenant un convoyeur à bande(s) transporteuse(s) arrangé transversalement par rapport à la direction d'avance de la mélangeuse et dimensionné pour s'étendre au moins sous l'ouverture de déchargement et ledit convoyeur étant composé d'une première et d'au moins une seconde parties constitutives, la ou chaque seconde partie étant reliée à la première partie par une liaison pivot autorisant son inclinaison par rapport à ladite première partie, par relèvement de l'extrémité libre extrémale de la seconde partie concernée au-dessus du plan de convoyage de ladite première partie,
mélangeuse caractérisée en ce que les moyens assurant le relèvement de l'extrémité libre de la seconde partie du convoyeur forment au moins un lien mécanique articulé comprenant une bielle reliant ladite seconde partie à un élément du châssis, la bielle étant pourvue d'une came montée pour se déplacer de manière guidée sur ou dans un chemin de came de l'élément de châssis et en ce que l'ensemble desdits moyens est disposé au-dessus de la liaison pivot, et préférentiellement au-dessus de ladite seconde partie et au-dessus du plan de convoyage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] et [Fig. 2] sont des vues respectivement en perspective et partielle de dessus d'une mélangeuse selon l'invention (du type à atteler), le convoyeur n'étant pas déporté et la seconde partie du convoyeur étant coplanaire avec la première partie (configuration rectiligne horizontale) ;
[Fig. 3] est une vue partielle en élévation frontale (selon une direction opposée à la direction d'avance) de la mélangeuse représentée sur la figure 1 et partiellement sur la figure 2, le timon et une partie de la tôle d'étanchéité principale étant enlevés, et le dispositif de déchargement étant en configuration rectiligne (première et seconde parties du convoyeur en position horizontale et coplanaires - position centrée de transport du convoyeur) ;
[Fig. 4] est une vue partielle, montrant à plus grande échelle le dispositif de déchargement de la figure 1 ;
[Fig. 5] et [Fig. 6] sont respectivement une vue partielle en perspective et une vue partielle en élévation frontale montrant le dispositif de déchargement et les tôles d'étanchéité faisant partie de la mélangeuse représentée sur la figure 1, la seconde partie du convoyeur étant en position inclinée ou relevée par basculement ;
[Fig. 7] est une vue similaire à celle de la figure 6, la bielle présentant une longueur utile différente (longueur utile plus importante-inclinaison moins prononcée de la seconde partie du convoyeur à l'état relevé), et,
[Fig. 8] est une vue en élévation frontale (similaire à celle de la figure 3) montrant le dispositif de déchargement complètement déporté pour une distribution à gauche (les première et seconde parties du convoyeur étant coplanaires).

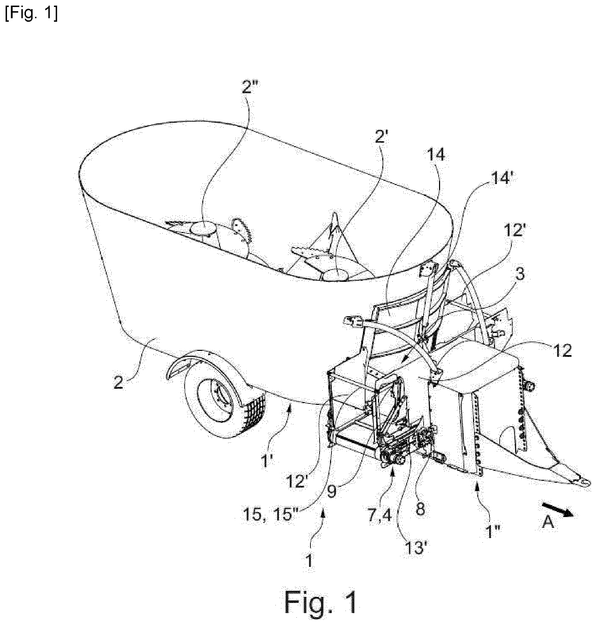

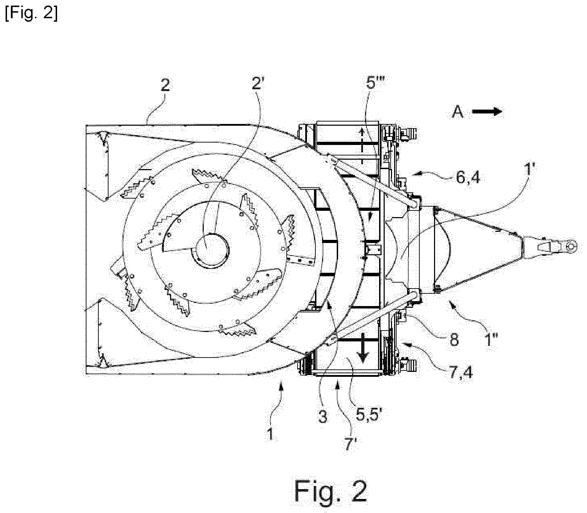

La figure 1 et partiellement la figure 2 montrent une mélangeuse (1) destinée à être attelée à un véhicule tracteur, comprenant un châssis porteur (1'), une cuve de mélange (2) avec une ouverture de déchargement (3), et un dispositif (4) de déchargement qui est associé à l'ouverture de décharge (3) et qui est apte et destiné à transporter le produit sortant de l'ouverture de déchargement (3) et à le déposer au niveau d'une table d'alimentation ou analogue située sur un côté latéral de ladite mélangeuse (1), lorsque cette dernière est mise en oeuvre dans une étable ou analogue. Sur les différentes figures, l'ouverture de déchargement (3) est ménagée à l'avant de la cuve de mélange (2). Cette ouverture (3) est centrée par rapport à la cuve de mélange (2) et peut être obturée partiellement ou totalement par un coulisseau ou volet coulissant (14), dont le déplacement est commandé par un actionneur (14'), par exemple un vérin hydraulique, entre une position dégagée et une position fermée. Le dispositif (4) de déchargement est donc positionné à l'avant de la cuve de mélange (2), du côté du dispositif de timon (1"), et disposé de manière à récupérer le produit mélangé traversant l'ouverture (3), pour le déplacer transversalement à la direction d'avance (A) et latéralement jusque vers la table d'alimentation des animaux. Dans une alternative non représentée, la mélangeuse est du type automotrice.

Ce dispositif de déchargement (4) comprend un convoyeur (5) à bande(s) transporteuse(s) (5') arrangé transversalement par rapport à la direction d'avance (A) de la mélangeuse (1) et dimensionné pour s'étendre au moins sous l'ouverture de déchargement (3). Ce convoyeur (5) est composé d'une première partie constitutive (6) et d'au moins une seconde partie constitutive (7), la ou chaque seconde partie (7) étant reliée à la première partie (6) par une liaison pivot (8) autorisant son inclinaison par rapport à ladite première partie (6), par relèvement de l'extrémité libre extrémale (7') de la seconde partie (7) concernée au-dessus du plan de convoyage (PC) de ladite première partie (6). Chaque partie (6, 7) peut comporter sa propre portion de bande transporteuse ou alors une portion correspondante d'une unique bande, fournissant dans les deux cas deux plans de convoyage (PC, PC') contigus, mutuellement coplanaires ou inclinés selon la position en pivotement de la seconde partie (7).

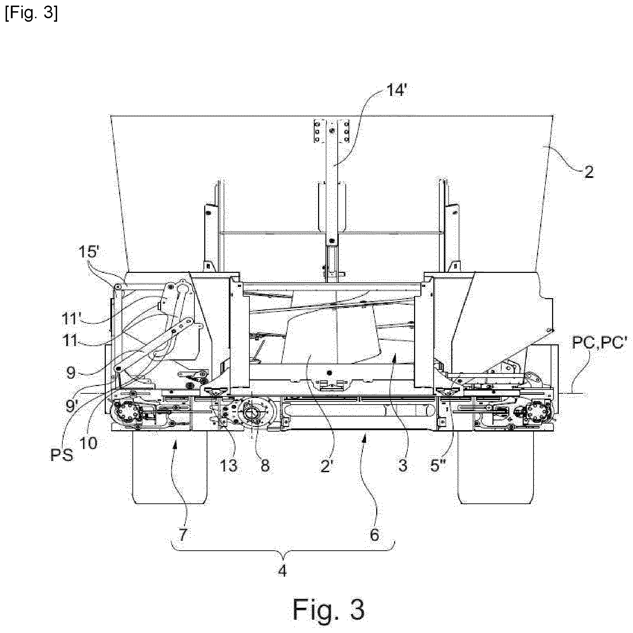

Sur les figures 1 et 2, la seconde partie (7) du convoyeur (5) s'étend à droite en regardant la mélangeuse (1) de l'arrière dans la direction d'avance (A), et donc cette seconde partie est située à gauche sur les figures 3 à 8. La distribution du produit mélangé se fera préférentiellement à droite compte tenu de la direction d'avance (A). Dans les différentes illustrations des figures 1 à 7, le produit mélangé est destiné à être distribué à droite. La ou les bandes transporteuses du convoyeur (5) sont ainsi déplacées vers la droite au moyen du/des moteurs respectifs. Le sens de déplacement de la bande transporteuse est représenté par des flèches sur la figure 2 qui est une vue de dessus. La seconde partie (7) s'étend à droite de la première partie constitutive (6). Selon une alternative non représentée, la seconde partie (7) du convoyeur (5) peut aussi être prévue sur le côté gauche en regardant la mélangeuse (1) de l'arrière dans la direction d'avance (A).

Conformément à l'invention, cette mélangeuse (1) est caractérisée en ce que l'ensemble des moyens (9, 10, 11) assurant ledit relèvement de l'extrémité libre (7') de la seconde partie (7) est disposé au-dessus de la liaison pivot (8), et préférentiellement au-dessus de ladite seconde partie (7) et au-dessus du plan de convoyage (PC).

Grâce à un tel arrangement, lesdits moyens (9, 10, 11) ne sont exposés ni aux chutes, ni à la circulation de produit sortant de l'ouverture de déchargement (3) et transporté par la ou les bandes transporteuses (5'). En outre, du fait de cette localisation, ces moyens sont clairement apparents et mieux intégrés dans l'encombrement global du dispositif de déchargement (4), et donc de la mélangeuse (1).

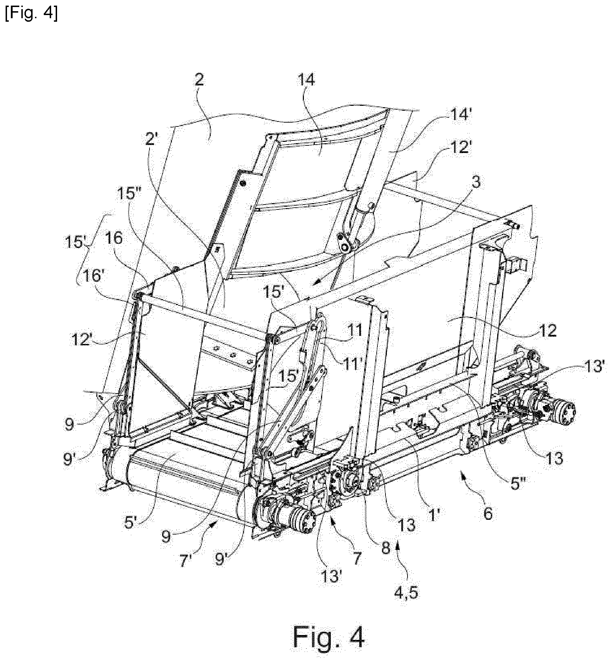

Les figures 3 et 4 illustrent le dispositif de déchargement (4) avec plus de détails. Sur ces figures, le dispositif de déchargement (4) ou le convoyeur (5) est représenté dans une configuration rectiligne c'est-à-dire que la première et la seconde parties constitutives (6, 7) sont en position horizontale et mutuellement coplanaire. Le convoyeur (5) est centré par rapport à la mélangeuse (1) et par rapport à la cuve de mélange (2). Le convoyeur (5) n'est pas déporté. Une telle position centrée du convoyeur (5) convient notamment pour la position transport de la mélangeuse (1).

Bien que l'invention soit décrite et représentée dans la présente uniquement en relation avec un convoyeur (5) ne présentant qu'une seconde partie (7), situé d'un côté de la première partie (6), l'homme du métier comprend que l'ensemble des dispositions et caractéristiques mentionnées peut bien entendu aussi s'appliquer à un convoyeur (5) comportant deux secondes parties (7), situées de part et d'autre de ladite première partie (6), ces différentes parties (6, 7) présentant des longueurs identiques ou différentes. De manière alternative, le dispositif (4) de déchargement peut être arrangé à l'arrière de la cuve de mélange (2), lorsque l'ouverture de déchargement (3) est positionnée à l'arrière de la cuve de mélange (2).

De manière avantageuse, les moyens (9, 10, 11) assurant le relèvement de l'extrémité libre (7') de la seconde partie (7) forment par association et coopération mutuelles au moins un lien mécanique articulé entre cette dernière et le châssis (1'), constituant un mécanisme de soulèvement de ladite seconde partie (7), par basculement autour de la liaison pivot (8). Un tel mécanisme peut être actif ou passif.

Afin de pouvoir distribuer le produit des deux côtés de la mélangeuse (1), avec un déport et à une distance variable, le convoyeur (5) est monté sur le châssis (1') pour être déplaçable en translation transversalement à la direction d'avance (A), par exemple sous l'effet d'un actionneur (5") linéaire, par exemple un vérin de réglage de déport relié au châssis (1'). L'actionneur (5") est préférentiellement fixé par son corps sur le châssis porteur (1') et avec sa tige sur le convoyeur (5).

En relation avec un tel convoyeur (5) mobile transversalement, il est préférentiellement prévu que les moyens (9, 10, 11) assurant le relèvement de l'extrémité libre (7') de la seconde partie (7) soient configurés pour réaliser un soulèvement automatique et progressif de ladite seconde partie (7), par basculement autour de la liaison pivot (8) depuis une position dans laquelle les deux parties constitutives (6, 7) sont sensiblement coplanaires, ce soulèvement ayant lieu lorsque le convoyeur (5) est déplacé latéralement du côté de cette extrémité libre (7'), préférentiellement après dépassement d'une position limite.

En accord avec l'invention, les moyens (9, 10, 11) assurant le relèvement de l'extrémité libre (7') de la seconde partie (7) du convoyeur (5) forment au moins un lien mécanique articulé. Ce ou chaque lien mécanique articulé comprend une bielle (9) reliant ladite seconde partie (7) à un élément (11') du châssis porteur (1'), la bielle (9) étant pourvue d'une came (10) montée pour se déplacer de manière guidée sur ou dans un chemin de came (11) de l'élément de châssis (11').

Préférentiellement, la came consiste en un galet (10) circulant dans un chemin de came sous forme d'une lumière (11) ménagée dans ledit élément de châssis (11'). Comme illustré sur les figures, l'élément de châssis (11') peut consister en une plaque ou une portion de paroi comprenant une découpe formant la lumière (11) et la bielle (9) comporter deux branches parallèles entre lesquelles est monté le galet (10) avec faculté de rotation, au niveau d'un site de montage. Lorsque ce galet (10) circule dans la lumière (11), les deux branches de la bielle (9) se déplacent le long des deux faces opposées de la plaque ou portion de paroi (11').

Le ou chaque lien mécanique articulé et plus précisément la bielle (9), la came (10) et le chemin de came (11) qui le constituent sont disposés au-dessus de la seconde partie (7) du convoyeur (5). Pour éviter qu'une accumulation de produit ne s'échappe par ou reste pris dans les lumières (11) lors du déchargement, il peut être prévu que celles-ci, ou au moins leur partie au niveau du couloir de distribution (5'"), soit recouverte par un dispositif de protection. D'une manière préférentielle, la lumière ou partie de lumière située le cas échéant à l'intérieur dudit couloir de distribution est protégée par un dispositif de protection, non représenté, tel qu'une plaque en métal ou plastique souple ou rigide. Bien évidemment, ce dispositif de protection ne doit pas empêcher le mouvement de la bielle (9), ni le déplacement du galet (10) dans la lumière (11).

Dans la position centrée du convoyeur (5) représentée sur les figures 3 et 4, l'actionneur (5") est à environ la moitié de sa course totale. De la même manière, la came (10) est positionnée environ au centre de la course du chemin de came (11). La bielle (9) se retrouve alors dans une position sensiblement inclinée par rapport à une position horizontale du convoyeur (5). L'utilisateur de la mélangeuse (1) pourra déplacer quelque peu le convoyeur (5) transversalement tout en maintenant la seconde partie (7) rectiligne ou horizontale.

Afin de pouvoir déplacer le convoyeur (5) transversalement sur une fraction de sa course de translation sans provoquer un relèvement de la seconde partie (7), le ou chaque chemin de came (11) fait état d'un arrangement et d'une configuration fournissant à la came (10) une circulation libre et sans contrainte, résultant en une absence de sollicitation sur la bielle (9) concernée - mouvement de pivotement de la bielle autour de la liaison articulé (9').

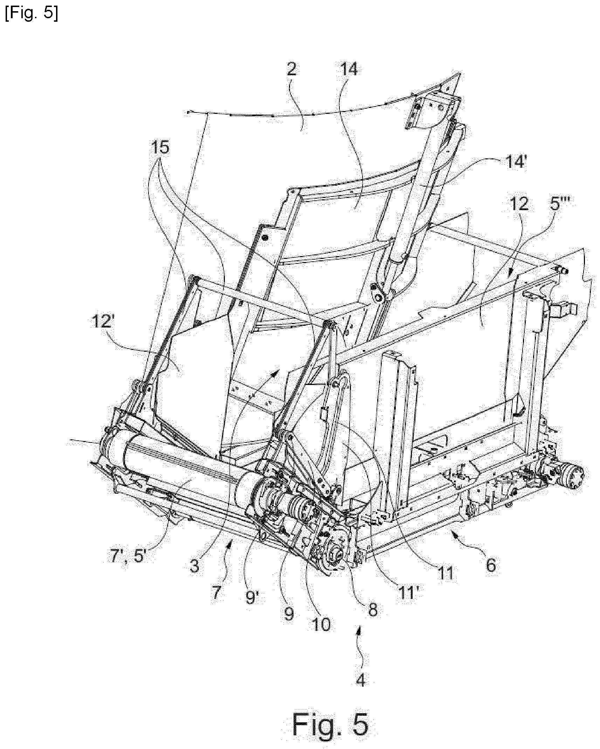

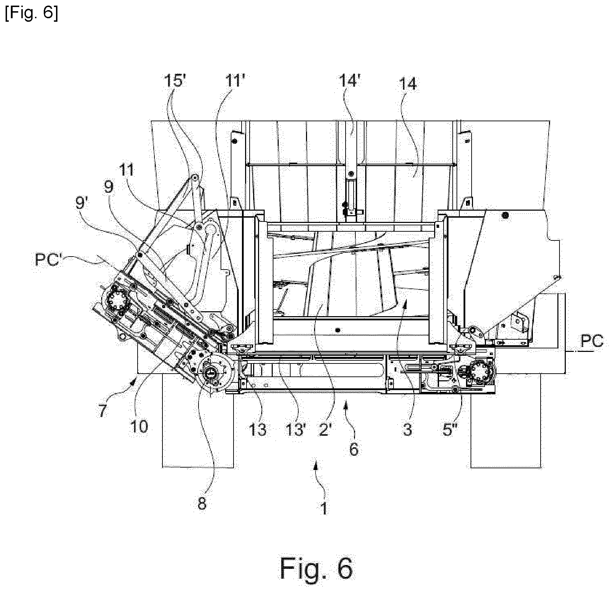

A cet effet, et en accord avec une variante constructive pratique, le chemin de came (11) peut présenter sur une majeure partie de son extension une orientation sensiblement perpendiculaire au plan de convoyage (PC) et disposer d'une position stable (PS) pour la came (10) permettant l'inclinaison de la seconde partie (7) du convoyeur (5), cette position (PS) déterminant avantageusement une position limite de début de soulèvement de cette seconde partie (7) en relation avec le déplacement en translation latérale dudit convoyeur (5), c'est-à-dire transversalement à la direction d'avance (A) de la figure 2. La came (10) est dans cette position limite ou position stable (PS) lorsqu'elle est positionnée en butée basse dans le chemin de came (11), comme cela ressort des figures 5 à 7. Le chemin de came (11) dispose de la position stable (PS) pour la came (10) dans sa partie inférieure, avantageusement en extrémité d'une portion finale courbe dudit chemin dirigée vers l'extrémité extérieur libre (7') de la seconde partie (7) du convoyeur. Ainsi, cette position stable (PS) au fond de la lumière (11) est décalée latéralement vers l'extérieur par rapport à la direction générale du chemin de came (11). A partir de cette configuration, et donc de ce positionnement en butée du galet (10), tout déplacement latéral supplémentaire du convoyeur (5) entraine un soulèvement additionnel (inclinaison plus importante) par pivotement autour de l'axe de la liaison (8) de la seconde partie (7). C'est le raccourcissement du vérin de déport (5") qui provoque le déplacement du convoyeur (5) et donc le soulèvement de la seconde partie (7) via la bielle (9) qui pivote autour de la came (10). Cette position soulevée de la seconde partie (7) est représentée sur les figures 5 et 6. Le vérin de déport (5") est raccourci au maximum. Une telle position déportée à droite et inclinée du convoyeur (5) est utilisée pour distribuer du produit mélangé dans une auge surélevée. Selon une alternative, le chemin de came (11) dispose d'une orientation inclinée par rapport à la verticale. L'orientation plutôt verticale du chemin de came (11) permettant un encombrement moindre.

En vue de contenir sur le convoyeur le produit déchargé par l'ouverture (3), la mélangeuse (1), et plus particulièrement le dispositif de déchargement (4), comprend au moins une tôle d'étanchéité (12, 12') montée fixe latéralement au-dessus du convoyeur (5) et définissant avec la bande (5') de ce dernier un couloir de distribution (5'").

Préférentiellement, le ou chaque lien mécanique articulé (9, 10, 11) est arrangé en dehors dudit couloir de distribution (5'") et la ou chaque bielle (9) est reliée par une articulation pivot (9') à la seconde partie (7) du convoyeur (5), préférentiellement au niveau de son extrémité libre (7'). Le ou chaque chemin de came (11) correspondant est avantageusement ménagé dans une plaque (11') située du côté opposé de la tôle d'étanchéité concerné par rapport au couloir (5'") comme représenté sur les figures, mais peut en variante également ménagé dans ladite tôle d'étanchéité.

Comme le montrent les figures annexées, la mélangeuse (1) peut comprendre une tôle d'étanchéité principale (12) disposée en regard de l'ouverture de déchargement (3) et au moins une tôle d'étanchéité secondaire (12') arrangée de manière décalée par rapport à ladite ouverture (3) du côté de la seconde partie (7) du convoyeur (5), ces tôles (12, 12') délimitant avec le convoyeur (5), au-dessus des bords longitudinaux duquel elles sont disposées, le couloir de distribution (5‴). Des éléments de structure permettent de rigidifier les tôles d'étanchéité disposées de part et d'autre du couloir de distribution (5‴). De plus, comme le montrent les figures annexées, la tôle d'étanchéité principale (12) peut présenter une structure composite avec une partie centrale (avantageusement escamotable) et des parties secondaires latérales, situées en regard des tôles d'étanchéité secondaires (12') fixées sur la cuve (2).

Bien entendu, un unique lien mécanique articulé peut suffire pour réaliser le soulèvement de la seconde partie (7). Mais, de manière préférée, la mélangeuse (1) comporte deux liens mécaniques articulés (9, 10, 11) situés en dehors dudit couloir de distribution (5‴), de part et d'autre de ce dernier et reliant chacun la seconde partie (7) à un élément de châssis (11') plan ou à l'une desdites tôles (12, 12'), lesquel(le)s intègrent chacun(e) un chemin de came (11) recevant la came (10) de la bielle (9) du lien correspondant. Ces liens sont ainsi situés respectivement dans les plans desdites tôles, ou dans des plans parallèles à ces dernières.

Par ailleurs, comme le montrent également les figures, un cadre déformable (15) assurant un renforcement structurel, un support additionnel et un guidage au niveau de la seconde partie (7) du convoyeur peut être prévu. Ce cadre comprend deux bras articulés (15') situés de part et d'autre du couloir de distribution (5‴), préférentiellement en dehors de ce dernier et derrière les tôles d'étanchéité (12, 12'). Chaque bras (15') est constitué par deux segments rigides (16 et 16') reliés entre eux de manière articulée, un premier segment (16) étant relié par ailleurs au châssis (1'), avantageusement à la partie de châssis (11') comportant le chemin de came (11), et le second segment (16') étant aussi relié à l'extrémité libre (7') de la seconde partie (7), à proximité de la liaison pivot (9'). Préférentiellement toutes les liaisons précités des segments (16, 16') sont des liaisons pivot et les bras (15') s'étendent dans des plans parallèles aux plans des liens mécaniques articulés (9, 10, 11). Enfin, le cadre (15) intègre également une traverse (15") reliant les deux bras (15'), préférentiellement au niveau des articulations entre leurs deux segments respectifs (16, 16').

Selon une caractéristique de l'invention, et comme le montrent les figures 2 à 8, la première partie (6) du convoyeur (5), et la seconde partie (7) lorsqu'elle n'est pas inclinée, sont guidées en coulissement transversalement à la direction d'avance (A) par un système à glissière, par exemple des galets (13) solidaires du châssis (1') et coopérant avec des rails latéraux (13') desdites parties (6 et 7) du convoyeur (5). Dans le mode de réalisation illustré, les galets (13) sont solidaires du châssis (1') et les deux parties du convoyeur (5) sont pourvues de rails (13'). Préférentiellement, les rails (13') sont dimensionnés et arrangés sur la seconde partie (7) et les galets (13) sont positionnés sur le châssis (1') de telles manières que ladite seconde parties (7) n'est plus guidée en translation (absence de coopération entre rails et galets) lorsque son soulèvement débute.

La seconde partie (7) présente avantageusement une longueur inférieure à celle de la première partie (6) et la longueur de cette première partie est avantageusement au moins égale à la largeur de l'ouverture de déchargement (3).

Afin d'assurer de manière simple un maintien coplanaire des deux parties (6 et 7), le convoyeur (5) est construit de telle manière que la seconde partie (7) du convoyeur (5) est en butée autour de la liaison pivot (8) en l'absence de soulèvement par les moyens (9, 10, 11) configurés pour assurer le relèvement de l'extrémité libre (7') de la seconde partie (7), le plan de convoyage (PC') de ladite seconde partie (7) étant alors coplanaire avec le plan de convoyage (PC) de la première partie (6). Un simple appui en butée de la seconde partie sur la première partie au niveau de la liaison pivot permet de garantir cette configuration.

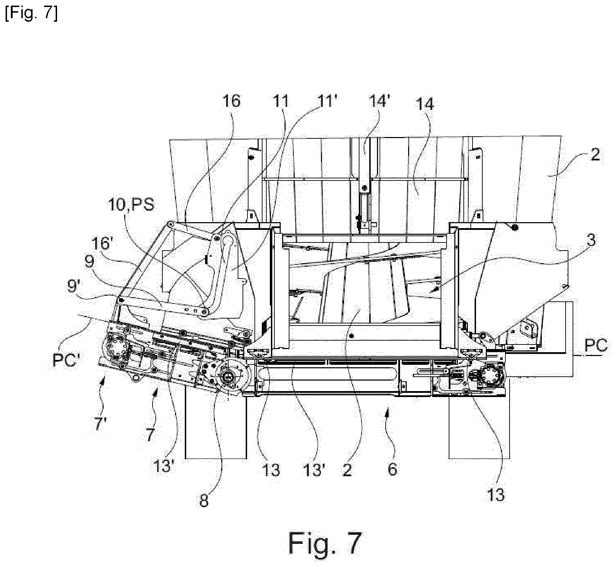

En vue de permettre de régler la cinématique et le degré de l'inclinaison de la seconde partie (7), il peut être prévu la possibilité de régler la longueur utile de la ou des bielles (9) concernée(s). A cet effet, la ou chaque bielle (9) peut comporter plusieurs sites de montage de la came (10) espacés selon la direction longitudinale de ladite bielle (9). La figure 7 illustre cette variante. Par comparaison avec la figure 6, la bielle (9) présente une longueur utile différente et, en l'occurrence, plus importante, ce qui limite la hauteur de soulèvement et l'inclinaison de la seconde partie (7) du convoyeur (5) lorsque le galet (10) est dans la position stable (PS) et que le convoyeur (5) est dans sa position décalée maximale du côté de l'extrémité libre (7') de la seconde partie (7). On remarque que la came (10) peut encore être montée dans une position intermédiaire (dans l'exemple illustré, trois sites de montage sont présents).

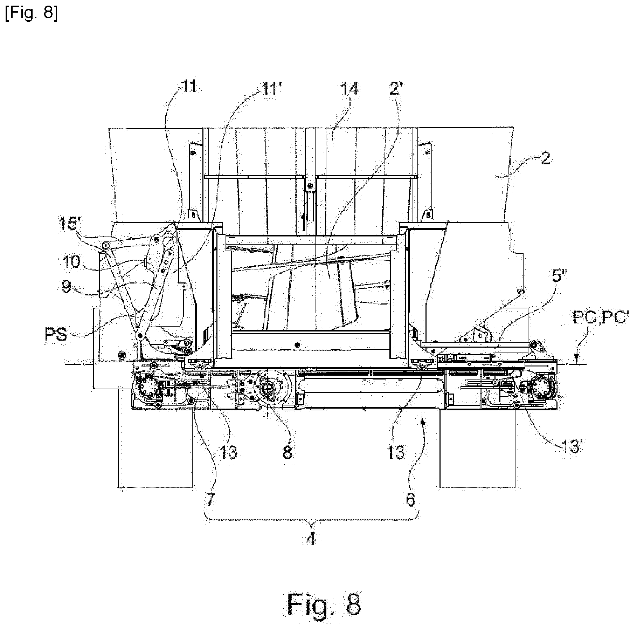

D'une manière particulièrement avantageuse, il est encore prévu de pouvoir distribuer du produit mélangé avec le dispositif de déchargement (4) et le convoyeur (5) selon l'invention du côté gauche compte tenu de la direction d'avance (A) : c'est-à-dire que le produit mélangé va être évacué ou déchargé par la première partie (6) vers la table d'alimentation. Il est bien entendu que la bande transporteuse (5') du convoyeur (5) est déplacé vers la gauche au moyen du/des moteurs d'entrainement respectifs. Cette variante de distribution est illustrée par la figure 8. Cette distribution de mélange se fera uniquement dans une configuration horizontale avec déport. Le vérin de déport (5") est totalement allongé de manière à ce que le produit distribué ne soit pas écrasé par les roues supportant le châssis porteur (1'), notamment par la roue gauche. Pour éviter que du produit mélangé soit retenu par la tige du vérin (5") ou par un autre élément, un élément de guidage tel qu'un déflecteur est fixé dans la partie inférieure de la tôle permettant de délimiter le couloir de distribution. Cette variante de distribution est rendue possible par l'amplitude du chemin de came (11), par rapport à la longueur utile de la bielle, et par son orientation. La position de la bielle (9) est sensiblement perpendiculaire au plan de convoyage (PC) (figure 8).

La mélangeuse (1) représentée sur la figure 1 dispose dans la cuve (2) de mélange de deux organes rotatifs avant (2') et arrière (2") qui sont aptes et destinés à mélanger, à traiter et à acheminer le produit à travers l'ouverture de décharge (3). La cuve (2) présente une section elliptique. Dans le cas d'une cuve de capacité plus petite, la cuve sera plutôt circulaire et ne contiendra alors qu'un seul organe rotatif. Chaque organe rotatif (2', 2") est de préférence une vis qui dont la rotation se fait selon un axe vertical.

Selon une alternative non représentée, la mélangeuse peut être une machine de distribution dont la section de la cuve est rectangulaire. L'organe rotatif sera alors de préférence sous la forme d'un tapis ou similaire qui délivre le produit vers l'ouverture de déchargement (3) frontale pour être distribuer sur l'un des côtés de la cuve rectangulaire avec le dispositif de déchargement (4) selon l'invention. Une telle machine de distribution est dépourvue d'élément ou d'organe (2', 2") apte à mélanger des produits dans la cuve, et son objectif principal est de transporter et de distribuer des produits déjà mélangés par l'ouverture de déchargement. Pour simplifier, on considère ici une telle machine de distribution comme une mélangeuse et au moins une, certaines ou l'ensemble des caractéristiques décrites ci-dessus et représentées aux dessins, relatives notamment au dispositif de déchargement (4), au convoyeur (5) et au(x) lien(s) mécanique(s) (9, 10, 11), peu(ven)t trouver application.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Mélangeuse (1), automotrice ou destinée à être attelée à un véhicule tracteur, comprenant un châssis porteur (1'), une cuve de mélange (2) avec une ouverture de déchargement (3), et un dispositif (4) de déchargement qui est associé à l'ouverture de décharge (3) et qui est apte et destiné à transporter le produit sortant de l'ouverture de déchargement (3) et à le déposer sur un côté latéral de ladite mélangeuse (1), par exemple au niveau d'une table d'alimentation, ledit dispositif de déchargement (4) comprenant un convoyeur (5) à bande(s) transporteuse(s) (5') arrangé transversalement par rapport à la direction d'avance (A) de la mélangeuse (1) et dimensionné pour s'étendre au moins sous l'ouverture de déchargement (3) et ledit convoyeur (5) étant composé d'une première et d'au moins une seconde parties constitutives (6 et 7), la ou chaque seconde partie (7) étant reliée à la première partie (6) par une liaison pivot (8) autorisant son inclinaison par rapport à ladite première partie (6), par relèvement de l'extrémité libre extrémale (7') de la seconde partie (7) concernée au-dessus du plan de convoyage (PC) de ladite première partie (6), mélangeuse (1) comprenant des moyens (9, 10, 11) assurant le relèvement de l'extrémité libre (7') de la seconde partie (7) du convoyeur (5) forment au moins un lien mécanique articulé comprenant une bielle (9) reliant ladite seconde partie (7) à un élément (11') du châssis (1'), la bielle (9) étant pourvue d'une came (10) montée pour se déplacer de manière guidée sur ou dans un chemin de came (11) de l'élément de châssis (11') et en ce que l'ensemble desdits moyens (9, 10, 11) est disposé au-dessus de la liaison pivot (8).

2. Mélangeuse selon la revendication 1, dans laquelle les moyens (9, 10, 11) assurant le relèvement de l'extrémité libre (7') de la seconde partie (7) forment par association et coopération mutuelles au moins un lien mécanique articulé entre cette dernière et le châssis (1'), constituant un mécanisme de soulèvement de ladite seconde partie (7), par basculement autour de la liaison pivot (8).

3. Mélangeuse selon la revendication 1 ou 2, dans laquelle le convoyeur (5) est monté sur le châssis (1') pour être déplaçable en translation transversalement à la direction d'avance (A), par exemple sous l'effet d'un actionneur (5") linéaire, et en ce que les moyens (9, 10, 11) assurant le relèvement de l'extrémité libre (7') de la seconde partie (7) sont configurés pour réaliser un soulèvement automatique et progressif de ladite seconde partie (7), par basculement autour de la liaison pivot (8) depuis une position dans laquelle les deux parties constitutives (6, 7) sont sensiblement coplanaires, ce soulèvement ayant lieu lorsque le convoyeur (5) est déplacé latéralement du côté de cette extrémité libre (7'), préférentiellement après dépassement d'une position limite.

4. Mélangeuse selon l'une quelconque des revendications 1 à 3, dans laquelle la came consiste en un galet (10) circulant dans un chemin de came sous forme d'une lumière (11) ménagée dans ledit élément de châssis (11').

5. Mélangeuse selon l'une quelconque des revendications 1 à 4, dans laquelle le chemin de came (11) présente sur une majeure partie de son extension une orientation sensiblement perpendiculaire au plan de convoyage (PC) et dispose d'une position stable (PS) pour la came (10) permettant l'inclinaison de la seconde partie (7) du convoyeur (5), et déterminant avantageusement une position limite de début de soulèvement de cette seconde partie (7) en relation avec le déplacement en translation latérale dudit convoyeur (5).

6. Mélangeuse selon l'une quelconque des revendications 1 à 5, dans laquelle le dispositif (4) de déchargement comprend au moins une tôle d'étanchéité (12, 12') montée fixe latéralement au-dessus du convoyeur (5) et définissant avec la bande (5') de ce dernier un couloir de distribution (5‴).

7. Mélangeuse selon l'une quelconque des revendications 1 à 6, comprenant une tôle d'étanchéité principale (12) disposée en regard de l'ouverture de déchargement (3) et au moins une tôle d'étanchéité secondaire (12') arrangée de manière décalée par rapport à ladite ouverture (3) du côté de la seconde partie (7) du convoyeur (5), ces tôles (12, 12') délimitant avec le convoyeur (5), au-dessus des bords longitudinaux duquel elles sont disposées, un couloir de distribution (5‴), et en ce qu'elle comporte deux liens mécaniques articulés (9, 10, 11) situés en dehors dudit couloir de distribution (5‴) de part et d'autre de ce dernier et reliant chacun la seconde partie (7) à un élément de châssis (11') plan ou à l'une desdites tôles (12, 12'), lesquel(le)s intègrent chacun(e)un chemin de came (11) recevant la came (10) de la bielle (9) du lien correspondant.

8. Mélangeuse selon l'une quelconque des revendications 1 à 7, dans laquelle la première partie (6) du convoyeur (5), et la seconde partie (7) lorsqu'elle n'est pas inclinée, sont guidées en coulissement transversalement à la direction d'avance (A) par un système à glissière, par exemple des galets (13) solidaires du châssis (1') et coopérant avec des rails latéraux (13') desdites parties (6 et 7) du convoyeur (5), la seconde partie (7) présentant avantageusement une longueur inférieure à celle de la première partie (6) et la longueur de cette première partie étant avantageusement au moins égale à la largeur de l'ouverture de déchargement (3).

9. Mélangeuse selon l'une quelconque des revendications 1 à 8, dans laquelle la seconde partie (7) du convoyeur (5) est en butée autour de la liaison pivot (8) en l'absence de soulèvement par les moyens (9, 10, 11) configurés pour assurer le relèvement de l'extrémité libre (7') de la seconde partie (7), le plan de convoyage (PC') de ladite seconde partie (7) étant alors coplanaire avec le plan de convoyage (PC) de la première partie (6).

10. Mélangeuse selon l'une quelconque des revendications 1 à 9, dans laquelle la ou chaque bielle (9) comporte plusieurs sites de montage de la came (10) espacés selon la direction longitudinale de ladite bielle (9).

11. Machine selon l'une quelconque des revendications 1 à 10, dans laquelle l'ensemble des moyens (9, 10, 11) assurant le relèvement de l'extrémité libre (7') est disposé au-dessus de la seconde partie (7) et au-dessus du plan de convoyage (PC).

## Patentansprüche

1. Mischwagen (1), der selbstfahrend oder zum Anhängen an ein Zugfahrzeug bestimmt ist, mit einem Tragrahmen (1'), einem Mischbehälter (2) mit einer Entladeöffnung (3) und einer Entladevorrichtung (4), die der Entladeöffnung (3) zugeordnet ist und die geeignet und bestimmt ist, das aus der Entladeöffnung (3) austretende Produkt zu transportieren und auf einer Seitenfläche des Mischwagens (1), zum Beispiel auf Höhe eines Futterplatzes, abzulegen, wobei die Entladevorrichtung (4) eine Fördereinrichtung (5) mit Förderband (Förderbändern) (5') umfasst, die quer zur Vorschubrichtung (A) des Mischwagens (1) angeordnet und so bemessen ist, dass sie sich mindestens unterhalb der Entladeöffnung (3) erstreckt, und wobei die Fördereinrichtung (5) aus einem ersten und mindestens einem zweiten Bestandteil (6 und 7) besteht, wobei der oder jeder zweite Teil (7) mit dem ersten Teil (6) über ein Drehgelenk (8) verbunden ist, das seine Neigung in Bezug auf den ersten Teil (6) durch Anheben des äußeren freien Endes (7') des betreffenden zweiten Teils (7) über die Förderebene (PC) des ersten Teils (6) gestattet,
Mischwagen (1) **dadurch gekennzeichnet, dass** die Mittel (9, 10, 11), die das Anheben des freien Endes (7') des zweiten Teils (7) der Fördereinrichtung (5) sicherstellen, mindestens eine mechanische Gelenkverbindung bilden, die eine Stange (9) umfasst, die den zweiten Teil (7) mit einem Element (11') des Rahmens (1') verbindet, wobei die Stange (9) mit einem Nocken (10) versehen ist, der derart montiert ist, um sich auf einer geführten Weise auf oder in einer Nockenbahn (11) des Rahmenelements (11') zu bewegen und dadurch, dass alle diese Mittel (9, 10, 11) über dem Drehgelenk (8) angeordnet sind.

2. Mischwagen nach Anspruch 1, **dadurch gekennzeichnet, dass** die Mittel (9, 10, 11), die das Anheben des freien Endes (7') des zweiten Teils (7) sicherstellen, durch gegenseitige Zuordnung und Zusammenarbeit mindestens eine mechanische Gelenkverbindung zwischen diesem Letzteren und dem Rahmen (1') bilden, die einen Mechanismus zum Anheben des zweiten Teils (7) durch Kippen um das Drehgelenk (8) darstellt.

3. Mischwagen nach Anspruch 1 oder 2, **dadurch gekennzeichnet, dass** die Fördereinrichtung (5) auf dem Rahmen (1') montiert ist, um quer zur Vorschubrichtung (A) translatorisch verschiebbar zu sein, zum Beispiel unter der Wirkung eines Linearantriebselements (5"), und dadurch, dass die Mittel (9, 10, 11), die das Anheben des freien Endes (7') des zweiten Teils (7) sicherstellen, ausgestaltet sind, ein automatisches und progressives Anheben des zweiten Teils (7) durch Kippen um das Drehgelenk (8) aus einer Position auszuführen, in der die zwei Bestandteile (6, 7) im Wesentlichen koplanar sind, wobei dieses Anheben stattfindet, wenn die Fördereinrichtung (5) seitlich auf Seite dieses freien Endes (7') verschoben wird, vorzugsweise nach Überschreiten einer Grenzposition.

4. Mischwagen nach irgendeinem der Ansprüche 1 bis 3, **dadurch gekennzeichnet, dass** der Nocken aus einer Rolle (10) besteht, die in einer Nockenbahn in Form eines in dem Rahmenelement (11') ausgebildeten Langlochs (11) läuft.

5. Mischwagen nach irgendeinem der Ansprüche 1 bis 4, **dadurch gekennzeichnet, dass** die Nockenbahn (11) über einen Großteil ihrer Ausdehnung eine im Wesentlichen senkrechte Ausrichtung zur Förderebene (PC) aufweist und über eine stabile Position (PS) für den Nocken (10) verfügt, die die Neigung des zweiten Teils (7) der Fördereinrichtung (5) ermöglicht und vorteilhafterweise eine Grenzposition für den Beginn des Anhebens dieses zweiten Teils (7) in Verbindung mit der seitlichen Translationsbewegung der Fördereinrichtung (5) bestimmt.

6. Mischwagen nach irgendeinem der Ansprüche 1 bis 5, **dadurch gekennzeichnet, dass** die Entladevorrichtung (4) mindestens ein Dichtblech (12, 12') umfasst, das seitlich über der Fördereinrichtung (5) fest angebracht ist und mit dem Band (5') dieser Letzteren einen Verteilungsbahn (5‴) definiert.

7. Mischwagen nach irgendeinem der Ansprüche 1 bis 6, **dadurch gekennzeichnet, dass** er ein Hauptdichtblech (12), das gegenüber der Entladeöffnung (3) angeordnet ist, und mindestens ein Nebendichtblech (12') umfasst, das in Bezug auf die Öffnung (3) auf Seite des zweiten Teils (7) der Fördereinrichtung (5) versetzt angeordnet ist, wobei diese Bleche (12, 12') mit der Fördereinrichtung (5), über deren Längsränder sie angeordnet sind, einen Verteilungsbahn (5‴) abgrenzen, und dadurch, dass er zwei mechanische Gelenkverbindungen (9, 10, 11) umfasst, die sich außerhalb der Verteilungsbahn (5‴) auf beiden Seiten dieses Letzteren befinden und jeweils den zweiten Teil (7) mit einem ebenen Rahmenelement (11') oder mit einem der Bleche (12, 12') verbinden, die jeweils eine Nockenbahn (11) integrieren, die den Nocken (10) der Stange (9) der entsprechenden Verbindung aufnimmt.

8. Mischwagen nach irgendeinem der Ansprüche 1 bis 7, **dadurch gekennzeichnet, dass** der erste Teil (6) der Fördereinrichtung (5) und der zweite Teil (7), wenn er nicht geneigt ist, gleitend quer zur Vorschubrichtung (A) durch ein Schiebersystem geführt werden, zum Beispiel Rollen (13), die fest mit dem Rahmen (1') verbunden sind und mit Seitenschienen (13') der Teile (6 und 7) der Fördereinrichtung (5) zusammenwirken, wobei der zweite Teil (7) vorteilhafterweise eine geringere Länge als der erste Teil (6) aufweist und die Länge dieses ersten Teils vorteilhafterweise mindestens gleich der Breite der Entladeöffnung (3) ist.

9. Mischwagen nach irgendeinem der Ansprüche 1 bis 8, **dadurch gekennzeichnet, dass** der zweite Teil (7) der Fördereinrichtung (5) um das Drehgelenk (8) herum in Anschlag ist, wenn kein Anheben durch die Mittel (9, 10, 11) erfolgt, die so ausgestaltet sind, dass sie das Anheben des freien Endes (7') des zweiten Teils (7) sicherstellen, wobei die Förderebene (PC') des zweiten Teils (7) dann koplanar mit der Förderebene (PC) des ersten Teils (6) ist.

10. Mischwagen nach irgendeinem der Ansprüche 1 bis 9, **dadurch gekennzeichnet, dass** die oder jede Stange (9) mehrere Montagestellen des Nockens (10) aufweist, die entlang der Längsrichtung der Stange (9) voneinander beabstandet sind.

11. Maschine nach irgendeinem der Ansprüche 1 bis 10, **dadurch gekennzeichnet, dass** die Gesamtheit der Mittel (9, 10, 11), die das Anheben des freien Endes (7') sicherstellen, über dem zweiten Teil (7) und über der Förderebene (PC) angeordnet ist.

## Claims

1. Mixer wagon (1), either self-propelled or intended to be hitched to a tractor vehicle, comprising a carrier chassis (1'), a mixing tank (2) with a discharge opening (3), and a discharge device (4) which is associated with the discharge opening (3) and is able and intended to convey the product leaving the discharge opening (3) and to deposit it on a lateral side of the said mixer wagon (1), for example on a feeding area, the said discharge device (4) comprising a belt (5') conveyor (5) arranged transversally with respect to the direction of advance (A) of the mixer wagon (1) and sized to extend at least under the discharge opening (3) and the said conveyor (5) being composed of a first and at least a second constituent parts (6 and 7), the or each second part (7) being connected to the first part (6) by a pivot connection (8) allowing its inclination with respect to the said first part (6), by raising the extreme free end (7') of the second part (7) concerned above the conveying plan (PC) of the said first part (6),
mixer wagon (1) **characterized in that** the means (9, 10, 11) used to raise the free end (7') of the second part (7) of the conveyor (5) form at least one articulated mechanical joint comprising a connecting rod (9) connecting the said second part (7) to an element (11') of the chassis (1'), the connecting rod (9) being provided with a cam (10) mounted so as to move in a guided manner on or in a cam track (11) of the element (11') of the chassis and **in that** all of the said means (9, 10, 11) are arranged above the pivot connection (8).

2. Mixer wagon according to claim 1, **characterized in that** the means (9, 10, 11) used to raise the free end (7') of the second part (7) form by mutual association and cooperation at least one articulated mechanical joint between the latter and the chassis (1'), constituting a mechanism to raise the said second part (7) by tilting about the pivot connection (8).

3. Mixer wagon according to claim 1 or 2, **characterized in that** the conveyor (5) is mounted on the chassis (1') so that it can be moved in translation transversally with respect to the direction of advance (A), for example under the effect of a linear actuator (5"), and **in that** the means (9, 10, 11) used to raise the free end (7') of the second part (7) are configured to automatically and progressively raise the said second part (7) by tilting about the pivot connection (8), from a position in which the two constituent parts (6, 7) are substantially coplanar, this raising occurring when the conveyor (5) is moved laterally on the side of this free end (7'), preferably after a limit position has been exceeded.

4. Mixer wagon according to any one of claims 1 to 3, **characterized in that** the cam consists of a roller (10) running in a cam track consisting of a slot (11) arranged in the said element (11') of the chassis.

5. Mixer wagon according to any one of claims 1 to 4, **characterized in that** the cam track (11) has, over most of its extension, an orientation that is substantially perpendicular to the conveying plan (PC) and has a stable position (PS) for the cam (10) allowing the second part (7) of the conveyor (5) to be inclined, and advantageously determining a limit position to start raising this second part (7) in relation with the lateral translation movement of the said conveyor (5).

6. Mixing wagon according to any one of claims 1 to 5, **characterized in that** the discharge device (4) comprises at least one sealing sheet (12, 12') fixedly mounted laterally above the conveyor (5) and defining with the belt (5') of the latter a distribution lane (5‴).

7. Mixer wagon according to any one of claims 1 to 6, **characterized in that** it comprises a main sealing sheet (12) arranged opposite the discharge opening (3) and at least one secondary sealing sheet (12') arranged in an offset manner with respect to the said opening (3) on the side of the second part (7) of the conveyor (5), these sheets (12, 12') delimiting with the conveyor (5), above the longitudinal edges on which they are arranged, a distribution lane (5‴), and **in that** it comprises two articulated mechanical joints (9, 10, 11) located outside the said distribution lane (5‴) on each side of the latter and each connecting the second part (7) to a flat element (11') of the chassis or to one of the said sheets (12, 12'), which each include a cam track (11) receiving the cam (10) of the connecting rod (9) of the corresponding joint.

8. Mixer wagon according to any one of claims 1 to 7, **characterized in that** the first part (6) of the conveyor (5), and the second part (7) when it is not inclined, are slidingly guided transversally with respect to the direction of advance (A) by a slide system, for example rollers (13) rigidly fastened to the chassis (1') and cooperating with side rails (13') of the said parts (6 and 7) of the conveyor (5), the second part (7) advantageously having a length that is less than that of the first part (6) and the length of this first part advantageously being at least equal to the width of the discharge opening (3).

9. Mixer wagon according to any one of claims 1 to 8, **characterized in that** the second part (7) of the conveyor (5) abuts about the pivot connection (8) if there is no raising by the means (9, 10, 11) configured to raise the free end (7') of the second part (7), the conveying plan (PC') of the said second part (7) then being coplanar with the conveying plan (PC) of the first part (6).

10. Mixer wagon according to any one of claims 1 to 9, **characterized in that** the or each connecting rod (9) comprises several mounting points for the cam (10) spaced apart in the longitudinal direction of the said connecting rod (9).

11. Machine according to any one of claims 1 to 10, **characterized in that** all of the means (9, 10, 11) used to raise the free end (7') are arranged above the second part (7) and above the conveying plan (PC).
